(19)

Europäisches
Patentamt
European
Patent Office
Office européen
des brevets

(11) **EP 4 553 466 B1**

(12) **EUROPEAN PATENT SPECIFICATION**

(45) Date of publication and mention
of the grant of the patent:
**11.03.2026 Bulletin 2026/11**

(21) Application number: **24211754.7**

(22) Date of filing: **08.11.2024**

(51) International Patent Classification (IPC):
**G01K 7/12** *(2006.01)*  **G01K 7/13** *(2006.01)*
**G01K 7/42** *(2006.01)*

(52) Cooperative Patent Classification (CPC):
**G01K 7/42; G01K 7/12; G01K 7/13**

(54) **FAST AND ACCURATE COMPENSATION METHOD IN A THERMOCOUPLE MEASUREMENT, AND A RESPECTIVE DEVICE**

SCHNELLES UND GENAUES KOMPENSATIONSVERFAHREN BEI EINER THERMOELEMENTMESSUNG UND EINE ENTSPRECHENDE VORRICHTUNG

PROCÉDÉ DE COMPENSATION RAPIDE ET PRÉCISE DANS UNE MESURE DE THERMOCOUPLE, ET DISPOSITIF RESPECTIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.11.2023 FI 20236246**

(43) Date of publication of application:
**14.05.2025 Bulletin 2025/20**

(73) Proprietor: **Beamex Oy Ab**
**68600 Pietarsaari (FI)**

(72) Inventor: **KETONEN, Hannu**
**68600 Pietarsaari (FI)**

(74) Representative: **Berggren Oy**
**P.O. Box 16**
**Fabianinkatu 21**
**00101 Helsinki (FI)**

(56) References cited:
**EP-B1- 2 508 857**      **DE-B4- 102010 052 478**
**US-A1- 2006 067 377**

• **ANONYMOUS: "Thermocouple Cold (Reference) Junction Compensation", BEAMEX OY AB CORPORATE WEBSITE, 19 September 2017 (2017-09-19), Pietarsaari (Finland), pages 1 - 6, XP093256762, Retrieved from the Internet <URL:https://cdn2.hubspot.net/hubfs/2203666/ Beamex_White_Papers/Beamex%20White% 20Paper%20-%20TC%20cold%20junction% 20compensation%20ENG.pdf? __hstc=107807261.45bb56452845da14f77870f0 f45c46d a.1741264440069.1741264440069.174126444006 9.1&__hssc=107807261.1.1741264440069& __hsfp=3677124428&hsCtaTracking=a7b7abe> [retrieved on 20250307]**

**Description**

**Technical field**

The present invention relates to temperature measurements performed with thermocouples.

**Background**

A thermocouple is an electrical device, which comprises two dissimilar electrical conductors forming an electrical junction. The thermocouple produces a temperature-dependent voltage as a result of the Seebeck effect, and this voltage can be interpreted to measure temperature. In this sense, it can be used as a temperature sensor and called as a thermoelectrical thermometer.

The Seebeck effect is an electromotive force that develops across two points of an electrically conducting material when there is a temperature difference between these two points. The ratio between the electromotive force and the temperature difference is the Seebeck coefficient (given in microvolts per kelvin (or Celsius); also called as thermopower), which is a specific property of the conducting material. It can be summarized that a thermocouple measures a potential difference (= voltage) across a hot and a cold end for two dissimilar materials, and this potential difference is proportional to the temperature difference between the hot and cold ends.

More formally, the Seebeck coefficient is defined as:

$$S = \frac{\Delta V}{\Delta T} = \frac{V_{cold} - V_{hot}}{T_{hot} - T_{cold}} = \frac{dV}{dT} = V'(T) \qquad (1)$$

where $V_{cold}$ is the voltage in the cold side, $V_{hot}$ is the voltage in the hot side, $T_{hot}$ is the temperature in the hot side, and $T_{cold}$ is the temperature in the cold side. Usually, the $\Delta T$ is determined to be a small temperature difference. Therefore, the Seebeck coefficient may also be defined as the first derivative of the produced thermal voltage with respect to temperature as indicated in equation (1).

The Seebeck coefficient of a material may be positive, negative or zero in relation to a reference material (which may be platinum in a commonly used situation), and it usually is provided at a temperature of 0 °C. The Seebeck coefficient changes as a function of temperature and it may be observed in metals, alloys and semiconductors. The Seebeck coefficient is always a non-linear parameter to at least some extent.

It is also possible to determine a relative Seebeck coefficient, which means the value of a certain material with respect to a reference material as follows:

$$S_{material,relative} = S_{material} - S_{reference} \qquad (2)$$

For instance, for aluminium-platinum pair at 0 °C, the relative S for aluminium with respect to platinum is -1.5 -(-5) μV/K = 3.5 μV/K.

In more detail about the working principle of the thermocouple, a thermal voltage is created when the ends of a metal wire locate in different temperatures when free electrons of atoms within the metal wire will move from a hot end to a cold end. The movement of the free electrons will end when the thermal voltage has increased to a level where it can resist the movement of the free electrons. The thermal voltage will be created in the metal wire along its whole length, and the magnitude of the thermal voltage is different with different metals or metal alloys. Semiconductors may be used in manufacturing a thermocouple, too. In such a case, the created thermal voltage is notably larger than with metals.

In a thermocouple, the other ends of two different metal wires are welded together, and the respective opposite ends will stay free. The "connected" end is a so-called hot end, and it works as the end where the temperature is measured. The free ends of the pair of wires will form the so-called cold end. The free ends will form the positive and the negative measurement wire. The polarity is determined based on which of the two metal wires holds the larger thermal voltage. When the temperature is measured, it is in fact a subtraction of thermal voltages created in these two metal wires manufactured of different metals or metal alloys.

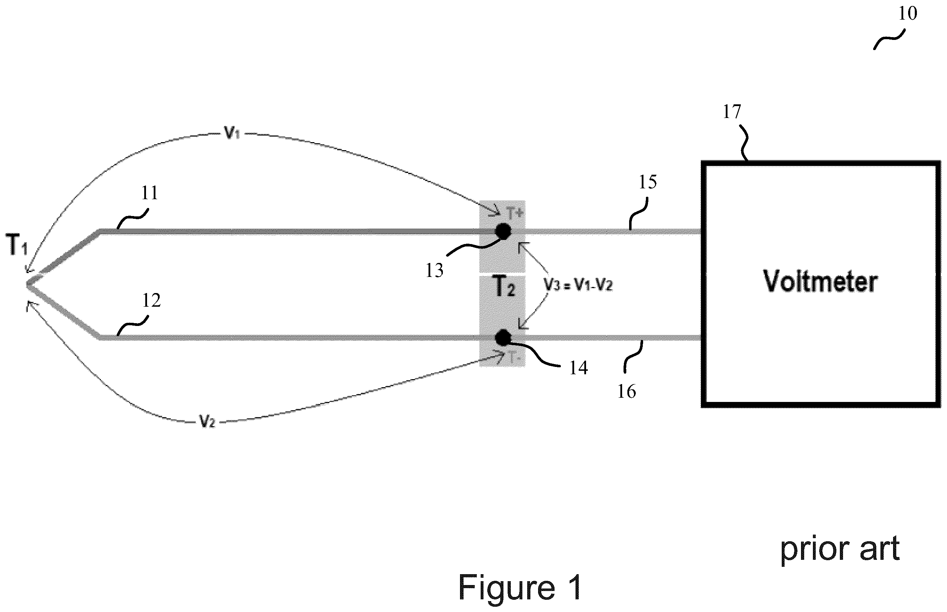

**Figure 1** illustrates this principle in a simplified visual illustration, showing a thermocouple as it is well known as such in the prior art. The arrangement 10 comprises a first metal wire 11 made of a first material which has a relatively large Seebeck coefficient. The arrangement 10 further comprises a second metal wire 12 made of a second material which has a relatively small Seebeck coefficient. The first 11 and second 12 metal wires are connected together in their hot end, and therefore, there is no potential difference between the first 11 and second 12 metal wires in the hot end. The first metal wire 11 can also be called as a positive measurement wire, and the second metal wire 12 can be called as a negative measurement wire.

A voltage meter 17 (marked here as "Voltmeter") is connected to the cold end, to the first 11 and second 12 metal wires so that wires 15, 16 form the actual measurement wires for the voltage meter 17. The material of the measurement wires 15, 16 may be of a third material, and in an embodiment, the third material is copper.

The temperature to be measured in Fig. 1 is $T_1$. In the positive measurement wire 11 there is created a larger thermal voltage ($V_1$) compared to a thermal voltage ($V_2$) created in the negative measurement wire 12. The voltage meter 17 is capable to measure a voltage difference ($V_3$) between the created thermal voltages as follows:

$$V_3 = V_1 - V_2 \hspace{3cm} (3)$$

In order to calculate the temperature $T_1$, one needs to know accurately the temperature $T_2$. This is due to the fact that there are data tables and calculation formulas which are specific to different thermocouple type characteristics. With the thermocouple type, it is meant the specific material pair, which form the thermocouple. The data tables and calculation formulas reveal the correspondence between the measured thermal voltage ($V_3$) in the cold end and the respective temperature ($T_1$) in the hot end in relation to the temperature value of 0 °C. In order to obtain temperature $T_1$ to be measured, the temperature $T_2$ needs to be subtracted from the temperature given by the data table or calculation formula.

Commonly, only a single temperature sensor $T_2$ is used in the connection points 13, 14 of the cold end. The above-mentioned data tables and calculation formulas do not include separately the temperature coefficients of the positive and the negative measurement wires within the thermocouple. Instead, the data tables and calculation formulas include a single correspondence between a thermal voltage and temperature value; with respect to temperature value of 0 °C. Therefore, it is very important that the temperature has stabilized between the positive and negative measurement wires. The stabilization process (seen from the temperature values, if they still change/fluctuate) may take relatively long time, even e.g. over an hour. The created thermal voltages and especially their differences between the positive and negative measurement wires affect the measurement error. When that voltage difference becomes greater, also the measurement error becomes greater before the temperature has completely stabilized in the connection points 13, 14.

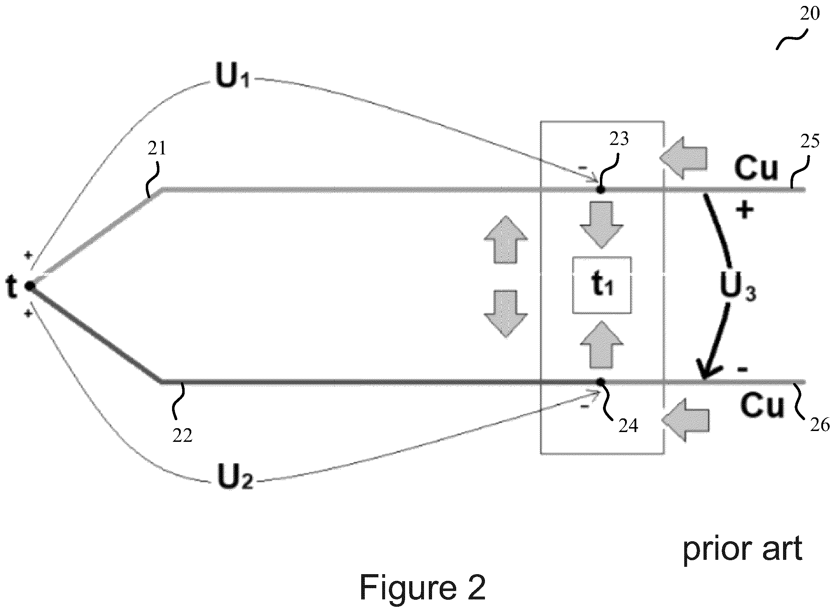

**Figure 2** illustrates another example of a traditional single point temperature measurement; thus, representing prior art. Some material examples used commonly in the thermocouples are illustrated as well.

The arrangement 20 comprises the hot end in the left-hand side of the illustration, and the cold end in the right-hand side of the illustration, like in Figure 1. The positive measurement wire (or conductor) 21 of this so-called K-type thermocouple is made from NiCr (i.e. chromel) in this exemplary thermocouple, where chromel is an alloy made of approximately 90 % nickel and 10 % chromium. The negative measurement wire (or conductor) 22 of the K-type thermocouple is made from NiAl (i.e. alumel) which is an alloy consisting of approximately 95 % nickel, 2 % aluminium, 2% manganese and 1 % silicon.

Measurement wires 25, 26 are made of copper, in this example. The connection between the positive measurement wire 21 and copper wire 25 is made via connection point 23. Respectively, the connection between the negative measurement wire 22 and copper wire 26 is made via connection point 24.

The first thermal voltage created in the positive measurement wire 21 is marked by $U_1$. Respectively, the second thermal voltage created in the negative measurement wire 22 is marked by $U_2$. A voltmeter (not shown) is capable to measure the potential difference $U_3$ in a single measurement point which is marked by a rectangular area involving the connection points 23-24, so that:

$$U_3 = U_1 - U_2 \hspace{3cm} (4)$$

From this voltage $U_3$, the cold end temperature $t_1$ is obtained. It is now notable that the measured temperature value $t_1$ is somewhere between the temperatures of the two cold junction terminals. With the described arrangement, the accuracy of the temperature measurement is compromised with temperature flows presented with wide arrows in Figure 2. In other words, thermal energy may flow from a calibrator (or from the voltmeter) to the terminals 23-24, and also outside temperature changes may flow to the terminals 23-24. It also takes time for the temperature to stabilize in the terminals 23-24 and for the temperature to stabilize in the midpoint of the terminals 23-24. When $t_1$ is known, then the hot end temperature t can be determined but the result is affected by the above non-idealities.

Thus, the accuracy of the arrangement shown in Figure 2 remains poor.

The technical problem of the above prior art is thus the slowness of the temperature measurement using a thermocouple. If the result is picked "quicker", this means that the obtained result is clearly inaccurate. These are the technical problems which the present invention proceeds to solve.

Generally with thermocouples, there is a common objective of maximizing the potential difference ($U_3$) between the two created thermal voltages ($U_1$ and $U_2$). This is achieved by selecting most appropriate metals and alloys which suit the intended purpose of use best, and noting also the measurement range of the temperatures, and the linearities (i.e. linearity of the behaviour) of different metals/alloys in this temperature range.

For instance, if magnitude of $U_1$ is sixfold compared to magnitude of $U_2$ (obtained from certain selection of metals/alloys), then the measurement error which occurs because of the temperature difference between the connection points of positive and negative wires, will be sixfold between these wires.

In practice, if there is a difference of 0,1 °C between the temperatures of terminals 23 and 24 in the cold end, this will result in six times greater measurement error in the positive measurement wire 21 than in the negative measurement wire 22.

Therefore, if two temperature sensors (locating close to one another) are used for enhancing thermal measurement accuracy, and if an average value is taken from the obtained results of these two temperature sensors, the result is inevitably inaccurate.

Proceeding to some other found prior art, DE 102013109809 discloses an improved temperature compensation of a thermocouple. This object is achieved by determining the cold junction temperature of a thermocouple, a reference temperature present in a housing being used to determine the cold junction temperature, and a temperature difference between the cold junction temperature and the reference temperature also being determined. In this case, the comparison point is preferably outside of the housing or is in the form of a connection point, for example in the form of a connection terminal, on the housing, particularly preferably on the outside of the housing. The temperature present at the reference point can be determined by means of an extrapolation, e.g. by means of a model of the temperature distribution, e.g. in and/or around the housing of the transmitter, in which case, for example, device-specific or housing-specific parameters are included in the determination of the reference point temperature. To determine the reference point temperature, the temperature difference between the reference point temperature and the reference temperature can then be determined, for example using stored data or the model of the temperature distribution. This temperature difference and the reference temperature present in the housing can then be used to determine the actual reference junction temperature. For example, a zone model of the temperature distribution can be used, with the presence of a temperature being assumed in one zone and with the temperature of two adjacent zones differing from one another. Finally, by determining the reference junction temperature, the absolute temperature at the measuring point can also be determined.

CN 101603863 discloses a method for realizing the temperature compensation of a cold junction of a thermocouple by a temperature field fitting method, which comprises the steps of establishing a mathematical model of temperature distribution on a plane determined by three points only through a distribution change discipline of the temperature of the three points, wherein the independent variable is the known temperature of the three points, and a function value is a temperature value of any point on the rectangular plane determined by taking the three points as vertexes; processing experimental data by a method of least squares to solve the undetermined coefficient of the model; and realizing the temperature compensation of thermocouples of all channels on the plane by measuring the temperature of the three points.

CN 215865540U discloses a thermocouple cold junction compensation circuit. The circuit comprises a differential operational amplifier and a bridge type voltage division circuit. The bridge type voltage division circuit is connected with the power supply and the differential operational amplifier, and the output voltage of the differential operational amplifier serves as the cold junction compensation voltage of the thermocouple. One bridge arm in the bridge type voltage division circuit comprises a resistive device of which the resistance value can be adjusted along with the temperature, and the other bridge arms comprise resistors of which the resistance values are fixed; the resistive device with the resistance adjustable along with the temperature and the cold end of the thermocouple are located in the same temperature environment. By adopting the scheme, when the cold end of the thermocouple is in different temperature environments, the resistance value of the resistive device also changes along with the temperature change, so that the compensation voltage of the compensation circuit also changes, the dynamic compensation of the cold end is realized.

EP 1510801 discloses a cold junction compensation system for a temperature measurement device having a processing circuit. The cold junction compensation system includes a cold junction temperature sensor arranged in signal communication with the processing circuit, a thermal coupler in thermal communication with the cold junction temperature sensor, and first and second contacts each in thermal communication with the thermal coupler and in electrical isolation with each other, each contact arranged for signal communication with the processing circuit and arranged for signal communication with a hot junction temperature sensor. A signal from the hot junction temperature sensor is communicated to the processing circuit via the first and second contacts, the cold junction temperature sensor senses the cold junction temperature at the first and second contacts via the thermal coupler, and a signal representative of the cold junction temperature is communicated to the processing circuit for enabling a cold junction compensation calculation.

EP2508857 B1 discloses a thermocouple comprising a cold end with two connector terminals, a hot end, an evaluation circuit, and a correction circuit. In a first embodiment, a single fiber-optical temperature sensor measures an average temperature between the temperatures of the connector terminals. In a second embodiment, two fiber-optical temperature sensors measure the respective temperatures of the connector terminals.

US 2006/0067377 A1 ("Streicher") discloses a cost-effective and accurate method for measuring cold junction temperature in multi-channel thermocouple configurations. Instead of affixing a temperature sensor (e.g., a thermistor) to each terminal or channel, the document describes using fewer sensors (at least three) and employing algorithms to interpolate and/or extrapolate the temperatures of the remaining terminals. This approach reduces the cost associated with using a sensor for each terminal while maintaining accuracy in cold junction temperature measurement. In pars. 0034, 0037 and 0038 of Streicher, there have been mentioned some examples of calculation processes applying averaging of certain values. In more detail, the cold junction temperature of a certain channel may be determined by e.g. averaging the measured temperature value at a first terminal and the measured temperature value at a second terminal. Some other possibilities have also been described.

The following problem in the prior art solutions still remains; there has not been presented any simple solution, which would provide rapid and accurate temperature measurement results with a thermocouple. Very long stabilization times are required, when using a single temperature sensor, before an accurate temperature result is guaranteed. Plain averaging does not solve the problem, if using two separate temperature sensors.

## Summary

The present invention introduces, in its first aspect, an arrangement for measuring temperature (t) using a thermocouple (30), where the thermocouple (30) comprises a cold end and a hot end, wherein the arrangement comprises a processor; and

- a positive conductor (31) of the thermocouple (30) and a negative conductor (32) of the thermocouple (30), where the positive (31) and negative (32) conductors are attached together in the hot end of the thermocouple (30), and where materials of the positive (31) and negative (32) conductors form a material pair; and
- a first measurement point (33) along the positive conductor (31), and a second measurement point (34) along the negative conductor (32);
  wherein the arrangement is configured to:

- obtain a Seebeck coefficient (S) for the material pair, either from previously obtained results in an external data source or by measuring temperature-voltage characteristics of the thermocouple (30);
- measure a thermal voltage ($U_3$) in the cold end of the thermocouple (30) where $U_3 = U_1 - U_2$, where $U_1$ is the generated thermal voltage in the positive (31) conductor of the thermocouple (30) and $U_2$ is the generated thermal voltage in the negative (31) conductor of the thermocouple (30);
- measure a first temperature ($t_1$) in the cold end of the thermocouple (30), using a first temperature sensor connected to the first measurement point (33); and
- measure a second temperature ($t_2$) in the cold end of the thermocouple (30), using the first temperature sensor or a second temperature sensor connected to the second measurement point (34).

The arrangement is characterized in that the processor of the arrangement is further configured to:

- calculate a weighted average of the temperature of the cold end ($T_{w,ave}$) by $\quad T_{w,ave} = t_1 - \dfrac{t_1 - t_2}{N} \quad$ where $N = \dfrac{U_1}{U_2}$ where N is obtained from the respective Seebeck coefficient data table for the respective material pair of the used thermocouple, according to $\quad N = \dfrac{S_+}{S_-}$, where S+ is a Seebeck coefficient of a positive conductor of a material pair, and S- is a Seebeck coefficient of a negative conductor of a material pair;
- transform the weighted average of the temperature of the cold end ($T_{w,ave}$) to a voltage either using a conversion data table of the used thermocouple type or using a calculation formula involving correction coefficients of the applied thermocouple type;
- add the measured thermal voltage to the calculated voltage value, thus obtaining a correct thermal voltage value for the hot end temperature calculation; and
- convert the correct thermal voltage value to a temperature value using the conversion data table of the used thermocouple type or the calculation formula supplied with the correction coefficients, thus obtaining an accurate hot end temperature value (t).

In an embodiment of the arrangement, the arrangement is further configured to:

- perform temperature measurements of the first ($t_1$) and second ($t_2$) temperatures separately, at mutually different times.

In an embodiment of the arrangement, obtaining the temperature of the hot end of the thermocouple (30) either from a data table or via a calculation formula, which comprises polynomial correction coefficients of the thermocouple (30), or by another means for transforming the thermal voltage into temperature.

In an embodiment of the arrangement, the ratio (N) of generated thermal voltages is configured to be applied as a temperature-dependent parameter either via data table -based information or via polynomial equations.

The present invention introduces, in its second aspect, a method for measuring temperature (t) using a thermocouple (30) in an arrangement, where the thermocouple (30) comprises a cold end and a hot end, the arrangement further comprising a processor, and

- a positive conductor (31) of the thermocouple (30) and a negative conductor (32) of the thermocouple (30), where the positive (31) and negative (32) conductors are attached together in the hot end of the thermocouple (30), and where materials of the positive (31) and negative (32) conductors form a material pair; and
- a first measurement point (33) along the positive conductor (31), and a second measurement point (34) along the negative conductor (32);

wherein the method comprises the steps of:

- obtaining a Seebeck coefficient (S) for the material pair, either from previously obtained results in an external data source or by measuring temperature-voltage characteristics of the thermocouple (30);
- measuring a thermal voltage ($U_3$) in the cold end of the thermocouple (30) where $U_3 = U_1 - U_2$, where $U_1$ is the generated thermal voltage in the positive (31) conductor of the thermocouple (30) and $U_2$ is the generated thermal voltage in the negative (31) conductor of the thermocouple (30);
- measuring a first temperature ($t_1$) in the cold end of the thermocouple (30), using a first temperature sensor connected to the first measurement point (33); and
- measuring a second temperature ($t_2$) in the cold end of the thermocouple (30), using the first temperature sensor or a second temperature sensor connected to the second measurement point (34).

The method is characterized in that the method further comprises the steps of:

- calculating a weighted average of the temperature of the cold end ($T_{w,ave}$) by $T_{w,ave} = t_1 - \frac{t_1 - \bar{t_2}}{N}$ where $N = \frac{U_1}{U_2}$ where N is obtained from the respective Seebeck coefficient data table for the respective material pair of the used thermocouple, according to $N = \frac{S_+}{S_-}$ where S+ is a Seebeck coefficient of a positive conductor of a material pair, and S- is a Seebeck coefficient of a negative conductor of a material pair;

- transforming the weighted average of the temperature of the cold end ($T_{w,ave}$) to a voltage either using a conversion data table of the used thermocouple type or using a calculation formula involving correction coefficients of the applied thermocouple type;
- adding the measured thermal voltage to the calculated voltage value, thus obtaining a correct thermal voltage value for the hot end temperature calculation; and
- converting the correct thermal voltage value to a temperature value using the conversion data table of the used thermocouple type or the calculation formula supplied with the correction coefficients, thus obtaining an accurate hot end temperature value (t).

In an embodiment of the method, obtaining the temperature of the hot end of the thermocouple (30) either from a data table or via a calculation formula, which comprises polynomial correction coefficients of the thermocouple (30), or by another means for transforming the thermal voltage into temperature.

In an embodiment of the method, the method further comprises the step of:

- applying the ratio (N) of generated thermal voltages as a temperature-dependent parameter either via data table -based information or via polynomial equations.

**Brief description of the drawings**

**Figure 1** illustrates a traditional single point measurement according to the prior art,

**Figure 2** illustrates a traditional single point measurement according to the prior art with some exemplary material selections,

**Figure 3** illustrates an embodiment of the present invention, which offers shorter stabilization times and fast and accurate measurement results, and

**Figure 4** illustrates how the present invention gives notably different results compared to mere averaging of the positive and negative terminal temperature values of a thermocouple.

**Detailed description**

The present invention introduces a faster and more accurate arrangement for temperature measurement using a thermocouple.

A main feature of the present invention is that the temperatures of both measurement wires (i.e. connector terminals, or conductors) of a cold junction of a thermocouple measurement are measured using two digital temperature sensors. The temperature sensors are selected so that they obtain accurate temperature results. The accuracy of the temperature sensors may be ensured by performing calibration of the sensors at first, e.g. using a dry block calibrator, in an embodiment of the invention.

In an embodiment of the invention, a first temperature sensor is connected directly to a connecting pin of the first connector terminal in the cold end of the thermocouple. Respectively, a second temperature sensor is connected directly to a connecting pin of the second connector terminal in the cold end of the thermocouple in the same embodiment of the invention. In this sense, a temperature measurement of the cold end by a single temperature sensor according to the prior art is now replaced by a measurement performed with two temperature sensors, using a following connection and calculation principle.

The temperature of the first and the second connector terminals are measured separately in an embodiment of the invention. The separate nature of the temperature measurement means that the first measurement time instant (of the first measurement wire) may be different from the time instant of the second measurement (of the second measurement wire).

In an embodiment of the invention, a so-called compensation of the cold end temperature of the thermocouple is performed by calculating a weighted average value of the temperatures measured by the two temperature sensors. In an embodiment, the weighted average value calculation means that it is obtained by dividing the temperature difference of $t_1$ and $t_2$ in the same ratio as the ratio (meaning: factor) of the voltages generated in the positive and negative conductors of the thermocouple in its cold end.

For example, if the thermal voltage generated on the positive conductor (= first measurement wire) of the thermocouple is six times greater than the thermal voltage generated on the negative conductor (= second measurement wire), the temperature difference between $t_1$ and $t_2$ is divided in the same ratio in an embodiment of the invention. If, for example, $t_1 = 26\,°C$ and $t_2 = 25.4\,°C$, the weighted average temperature is $25.9\,°C$. With this weighted average temperature value, a very accurate measurement result is obtained, even when the temperature of the cold end has not yet stabilized. This has a further advantage of allowing very rapid measurements which significantly shorten the required temperature measurement time.

In an equation form, if the coefficient with which the negative conductor thermo-voltage $U_2$ needs to be multiplied in order to obtain the positive conductor thermo-voltage $U_1$, is "N", then the desired weighted average temperature value is:

$$T_{w,ave} = t_1 - \frac{t_1 - t_2}{N}, \qquad (5)$$

where N is:

$$N = \frac{U_1}{U_2} \qquad (6)$$

In other words, the equation (5) may also be written as:

$$T_{w,ave} = t_1 - \frac{t_1 - t_2}{\frac{U_1}{U_2}} = t_1 + \frac{U_2}{U_1}(t_2 - t_1) \qquad (7)$$

It is notable that N of a material pair relates to the relative Seebeck coefficient $S_{ma\text{-}terial,relative}$ as follows:

$$N = \frac{S_+}{S_-} \,, \qquad\qquad\qquad (8)$$

where S+ is a Seebeck coefficient of a positive conductor of a material pair, and S_ is a Seebeck coefficient of a negative conductor of a material pair.

With this weighted average calculation principle, the temperature in the hot end of the thermocouple can be calculated accurately even if the temperature between the two connector terminals of the cold end is slightly different between them. The respective cold end temperatures are typically different when environmental conditions have changed recently, and the device is stabilizing (meaning: changing and asymptotically reaching, concerning its temperature) to the new ambient temperature value.

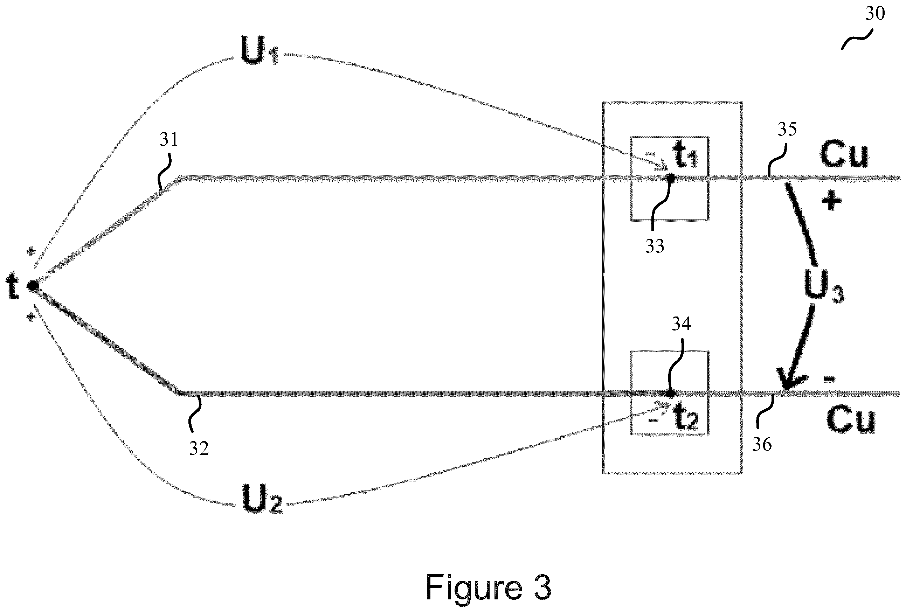

In the following, illustration of Figure 3 according to an embodiment of the invention is discussed, and its comparisons to prior art situations of Figures 1 and 2 are discussed as well.

**Figure 3** presents a connection of a thermocouple 30 and used measurement points 33, 34 for the cold end of the thermocouple 30 which are used in the shown embodiment according to the present invention. This may also be called as a thermocouple circuit. The shown thermocouple 30 consists of two wires 31, 32 welded together in one end (the hot end in the left-hand side), where the two wires 31, 32 are made from different metals, thus having mutually different thermoelectric properties. In this embodiment, the positive conductor 31 is made of chromel (NiCr) and the negative conductor 32 is made of alumel (NiAl). In other words, this is a K-type thermocouple. However, the present invention is applicable with any kinds and types of thermocouples, comprising any material pairs. Even semiconductor materials may be used in such thermocouples.

Thermal voltage and electrical energy in the thermocouple circuit is generated in the connection from the temperature difference between the hot end temperature (marked as "t") and the cold end temperature, which actually consists of two separate points 33, 34 ("$t_1$" and "$t_2$", respectively). Measured voltage $U_3$ can be defined as a potential difference between copper wires 35, 36 which is the difference of thermal voltages $U_1$ and $U_2$. In other words,

$$U_3 = U_1 - U_2 \qquad\qquad\qquad (9)$$

Naturally, the material pair may be different than the one shown in this illustration. Also copper as the material selected for wires 35, 36 can be changed to another material, in various other embodiments of the invention.

When the temperature is measured from both terminals 33, 34 of the cold end (as $t_1$ and $t_2$) of the thermocouple and the temperature is balanced with a ratio of the expected thermal voltages $U_1$ and $U_2$, it is possible to calculate the cold end temperature in real time and also more accurately than with conventional single point measurement presented and discussed earlier in connection of Figures 1 and 2.

In an embodiment of the invention, the temperature of the hot end of the thermocouple can be calculated with equations based on temperature voltage coefficients (Seebeck coefficients) of the used materials (i.e. thermocouple material data tables) or with more detailed data tables that take into account also the nonlinearities of the thermal voltages. Cold end temperatures and the difference between the temperatures can then be taken into account in the calculations of the hot end temperature.

For different metals and alloys, there exists ready-to-use data tables comprising Seebeck coefficients, which data tables can be used to obtain mutual relationships of the thermal voltage differences between the positive and negative conductor for various material pairs used in the thermocouples. Regarding the present invention, this data needs to be known for each different type of thermocouple which are used with the inventive concept; if the method is applied to several different thermocouple types used in the arrangement. If only a single type of a thermocouple is taken into use in the arrangement (like the used thermocouple having a chromel-alumel material pair in the conductors, i.e. using a K-type of thermocouple as shown in the example of Fig. 3), then the presented arrangement merely requires Seebeck coefficient data table for that single material pair. In the example of Fig. 3, such a data table then consists the material pair of chromel (NiCr) and alumel (NiAl). This data table may be created as a result of earlier conducted measurements by the thermocouple manufacturer. In an embodiment of the invention, the data table information is used in obtaining the hot end temperature t of the thermocouple as described earlier, using also the accurate measurement result of the cold end obtained via the above-described process according to the present invention.

In more detail, the hot end temperature determination proceeds as follows, in an embodiment of the invention:

1) Measuring the thermal voltage $U_3$ in the cold end, and also measuring the temperatures $t_1$ and $t_2$ in the measurement points 33, 34 of the cold end.

2) Calculating the weighted average of the temperature ($T_{w,ave}$) from the cold end temperature results $t_1$ and $t_2$ which calculation is made according to the type and/or materials of the used thermocouple 30.

3) Transforming the weighted average of the temperature ($T_{w,ave}$) to a voltage either using a conversion data table of the used thermocouple type or using a calculation formula involving correction coefficients of the applied thermocouple type.

4) Adding the measured thermal voltage to the calculated voltage value, and thus, a correct thermal voltage value for the hot end temperature calculation is obtained. This correct thermal voltage value corresponds to the 0 °C reference point used in thermocouple data tables and calculation formulas.

5) Converting the correct thermal voltage value to a temperature value using the conversion data table of the used thermocouple type or the calculation formula supplied with the correction coefficients. Hence, an accurate hot end temperature value is obtained.

In case proper Seebeck coefficients are not available for the used material pair of the thermocouple from existing sources, it is also possible to test the used materials of the thermocouple by measurements. In an embodiment of the invention, this is performed by measuring the magnitude of an induced thermoelectric voltage in response to a temperature difference across the material; this is the same as the Seebeck coefficient of that particular material. For a material pair, the thermal voltage created in the positive conductor minus the thermal voltage created in the negative conductor ($U_1 - U_2$), is the Seebeck coefficient of that material pair (=S).

Concluding from the previously discussed matters, the parameter "N", as in equations (5) and (6), is obtained from the respective Seebeck coefficient data table for the respective material pair of the used thermocouple. In this way, $T_{w,ave}$ (as in equation (7)) and finally, t can be obtained with great accuracy.

In the following, an embodiment of the invention is introduced where the temperature dependency of the thermal voltage ratio in specific thermocouples (i.e. material pairs) is taken into account. In an earlier described simpler embodiment, the thermal voltage ratio "N" is a calculated and constant value, which is based on general material characteristics of the material pair of the thermocouple. As mentioned above, this earlier described embodiment involves a thermocouple (material pair) specific Seebeck value fixed to a temperature value of 0 °C. Now in the present embodiment taking the temperature dependency as a real-life characteristic into account, the value N (i.e. the ratio of the thermal voltages) is determined as a function of temperature, and thus, it is a non-constant value. The value N may be presented in a table form or by a polynomial equation. In this way, the system is able to take into account and correct various temperature dependent or certain temperature value specific deviations, which are present in the currently selected thermocouple applying two specific material wires. Each different type of thermocouple may have its own specific temperature dependent graph in this regard, and even some other anomalies in the system may be taken into account.

For example, if a wire made of constantan (i.e. Cu-Ni alloy) is considered and a Seebeck coefficient is considered between a temperature range of 100 K ... 650 K, the Seebeck coefficient decreases from around -15 $\mu$V/K to around -55 $\mu$V/K in a slightly non-linear fashion when the temperature increases.

The presented embodiment with temperature dependent thermal voltage ratio N has a notable advantage when temperatures $t_1$ and $t_2$ deviate clearly from one another; this might happen when there is a quick temperature change in the cold end of the thermocouple.

When the temperature of the cold end has already become completely steady (meaning that $t_1 = t_2$), the Seebeck coefficients in an available database or in polynomial equations concerning the thermocouple type at hand already takes into account the deviations relating to each of the used wires of the thermocouple.

Therefore, this embodiment is most beneficial in a situation where $t_1$ and $t_2$ notable deviate with one another; in rapidly occurring temperature changes.

Thus, in the described embodiment applying a temperature dependent value of N, in a situation of rapidly varying cold end temperature, the accuracy of the temperature measurement with the described arrangement can be classified as "excellent". In the earlier described embodiment, where the value of N is considered and applied as a constant value over an applied temperature range, the accuracy of the temperature measurement with the described arrangement can be classified as "very good", in situations where the cold end temperatures do not change very quickly.

Concerning the technical effect obtained by various embodiments of the present invention, the following conclusions are brought up.

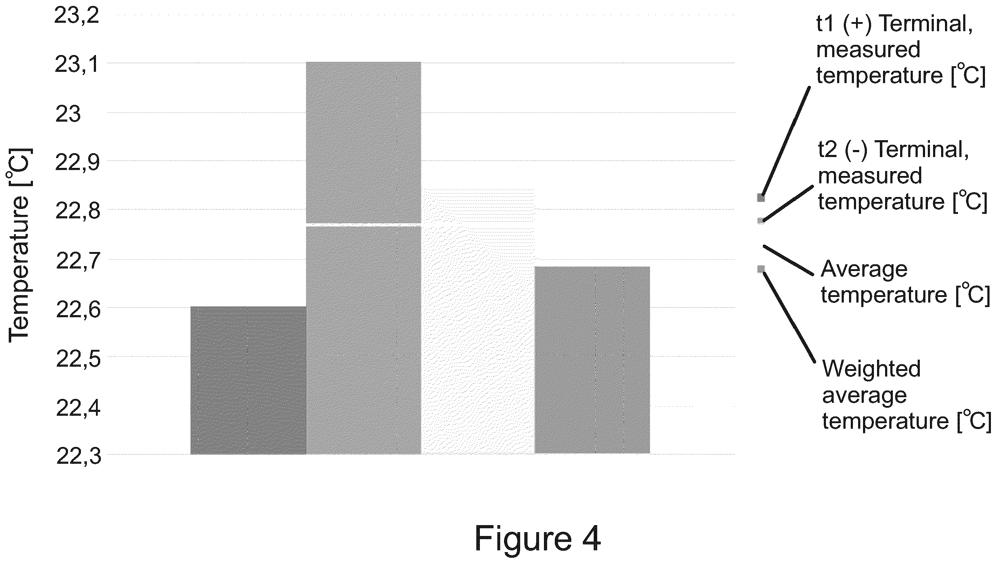

**Figure 4** illustrates how the present invention gives notably different results compared to mere averaging of the positive and negative terminal temperature values (described earlier) of a thermocouple.

The illustration shows temperature distribution between certain elements of the thermocouple, and in the calculated results in a prior art solution and in accordance with the present invention.

In this example, the thermal voltage ratio between the positive and the negative conductor is 6.1. The left-hand most vertical bar in the illustration shows the measured temperature of the positive terminal of the thermocouple (in °C). In this example, this temperature ($t_1$) is 22.6 °C. The second vertical bar from the left is the measured temperature of the negative terminal of the thermocouple (in °C). In this example, this temperature ($t_2$) is 23.1 °C.

In the prior art method, in case of notably different temperatures of the terminals in the cold end due to recent rapid change in the cold end of the thermocouple, it applies mere average value calculation of the measured temperatures of the positive and negative terminals. In this way, the $T_{ave}$ is in this example = 22.85 °C. It can be concluded that in this situation, the precision of measurement is mediocre.

In the present invention, a weighted average temperature value is obtained. This is represented by the fourth bar from the left (= the right-most bar). The weighted average temperature value $T_{w,ave}$ is calculated as guided in equation (7) in the above description.

The weighted average temperature value is calculated as:

$$(1/(6,1)) * (23,1 \ °C - 22,6 \ °C) + 22,6 \ °C \sim= 22,682 \ °C$$

and it is shown in the fourth bar of the illustration.

This temperature differs notably from the above calculated direct average temperature $T_{ave}$.

The weighted average temperature value corresponds accurately to the completely steadied temperature in the cold end of the thermocouple. The present invention can be said to predict the steadied temperature value well before the actual stabilized situation has occurred; i.e. during the dynamic situation where the terminal temperatures (or either of them) are still changing. This is a notable advantage of the present invention.

When the value of N increases, then the difference between $T_{ave}$ and $T_{w,ave}$ gets larger. Hence, with especially larger N's, the moderate accuracy obtained from $T_{ave}$ can be changed to very precise result with $T_{w,ave}$. Furthermore, the very precise result is obtained already during the temperature stabilization period; hence, the measurement time is shortened significantly compared to the prior art. This is a great practical advantage, allowing for instance more temperature measurements to be conducted in the same time period.

When considering the embodiment where N is a temperature dependent parameter (non-constant), the presented weighted average temperature calculation principle allows correcting or compensating various phenomena or physical realities in the measuring arrangement. For instance, characteristic errors present in the conductors (wirings) of the thermocouple may be "corrected" when applying the calculation principle according to the present invention. Even some non-desired temperature-dependent characteristics which are caused by the mechanical structure of the measurement assembly may be corrected when a proper polynomial equation or data table is applied. The method according to the present invention is capable to compensate in practice all temperature related or temperature dependent (present with certain temperature values or ranges, for example) errors of the whole thermocouple measurement chain. Hence, a very good accuracy of the temperature measurement results is obtained. Also, this result can be obtained in a very speedy fashion with no defects in the result quality. This characteristic of the present invention may be utilized e.g. in processes, where similar type of temperature cycling process is repeated over and over again.

The advantages of the present invention are discussed also in the following sections.

The accuracies of the used temperature sensors and the accuracy of the values within the thermocouple material data table or within the calculation formula affect the measurement accuracy of the presented method according to the invention. With the present invention and its weighted value calculation principle, it is possible to obtain a ten-fold increase (i.e. enhancement) of accuracy already at the starting moments of the measurement, if the present invention is compared to a reference prior art measurement comprising two temperature sensors when using their direct average temperature value as such. Using two temperature sensors and a weighted average temperature calculation principle as described in connection with the present invention, the accuracy of the temperature measurement using a thermocouple is thus improved significantly.

Besides the accuracy, also the required measurement time needed for obtaining an accurate result decreases significantly. When the environmental conditions, comprising the temperature, change, accurate measurement results can be obtained much faster than in prior art solutions. With current solutions according to the prior art, the operator of the temperature measurement arrangement (i.e. the user) must wait for a certain time period for the conditions to stabilize. This is particularly true when two conductors of a thermocouple have notably different temperatures between one another. In that situation in prior art, the user needed to wait pretty long before the temperatures of the two conductors ended up being quite close, and then proceeding with plain averaging of these temperature values. This stabilization process will take a time, which could be tens of minutes, or even over an hour.

With the presented arrangement according to the invention, the starting point of the principle is that the temperatures of the two conductors may be substantially different. There could have been a notable change of temperature in the measurement location which still affects the wires of the thermocouple, and possible not in a uniform fashion between the wires. Still, the present invention and its "weighted average" calculation principle makes it possible to obtain a very accurate temperature result in a very quick (almost instant) manner. It can be concluded that the required measurement time is in the range of seconds compared to the range of tens of minutes of waiting time associated with conventional solutions. With notably shorter waiting times, the operator is able to perform a larger number of temperature measurements in the same time period, without compromising accuracy. Time can be saved to other tasks, for example. Frustration is minimized with the presence of the present invention.

In the context of the application areas, which are industrial calibrations in industrial environments, such as automation lines, production lines, and factories in general, the advantages are tangible resulting from the very short stabilization times. In industrial processes, the environmental conditions of a product to be processed or manufactured may still vary to a notable extent and/or change rapidly, especially concerning the temperature. Therefore, the available time for doing proper measurements with good measurement accuracy may be very short. In industrial environment, time available for calibrations is usually limited due to scheduled maintenance times and lots of calibrations need to be performed during said maintenance times, whose start and end times are usually well determined e.g. in a production line. The present invention indeed allows the temperature measurements to be performed in a limited available time, which may be a relatively short or even very short time period. Hence, the present invention suits exceptionally well in industrial processes involving industrial calibrations, and for instance processes which require lots of temperature measurements to be performed in a short time span.

Furthermore, with a single temperature sensor, there are various inaccuracies such as uneven thermal distribution, thermal energy flows (which might act in a complex way), and thermal losses. With the present invention, these inaccuracy sources are handled well, and the measured temperature result based on the inventive principle will be very accurate and it can also be obtained very quickly.

Even after a long waiting period, the inventive concept of using two temperature sensors and the weighted average calculation principle results in greater measurement accuracy than by using merely a single temperature sensor. Hence, even in that situation, the present invention is advantageous.

In practice, there is no need for waiting any substantial stabilization time in order for the method according to the invention to work well.

Hence, technical effects and advantages are notable with the presented embodiments of the present invention, when compared to the various prior art solutions.

The present invention is not restricted merely to embodiments presented in the above, but the scope of the present invention is determined by the claims.

**Claims**

1. An arrangement for measuring temperature (t) using a thermocouple (30), where the thermocouple (30) comprises a cold end and a hot end, wherein the arrangement comprises a processor; and

   - a positive conductor (31) of the thermocouple (30) and a negative conductor (32) of the thermocouple (30), where the positive (31) and negative (32) conductors are attached together in the hot end of the thermocouple (30), and where materials of the positive (31) and negative (32) conductors form a material pair; and
   - a first measurement point (33) along the positive conductor (31), and a second measurement point (34) along the negative conductor (32);

   wherein the arrangement is configured to:

   - obtain a Seebeck coefficient (S) for the material pair, either from previously obtained results in an external data source or by measuring temperature-voltage characteristics of the thermocouple (30);
   - measure a thermal voltage ($U_3$) in the cold end of the thermocouple (30) where $U_3 = U_1 - U_2$, where $U_1$ is the generated thermal voltage in the positive (31) conductor of the thermocouple (30) and $U_2$ is the generated thermal voltage in the negative (31) conductor of the thermocouple (30);
   - measure a first temperature ($t_1$) in the cold end of the thermocouple (30), using a first temperature sensor connected to the first measurement point (33);
   - measure a second temperature ($t_2$) in the cold end of the thermocouple (30), using the first temperature sensor or a second temperature sensor connected to the second measurement point (34);

   **characterized in that** the processor of the arrangement is further configured to:

   - calculate a weighted average of the temperature of the cold end ($T_{w,ave}$) by $T_{w,ave} = t_1 - \dfrac{t_1 - t_2}{N}$

   where $N = \dfrac{U_1}{U_2}$ where N is obtained from the respective Seebeck coefficient data table for the respective material pair of the used thermocouple, according to $N = \dfrac{S_+}{S_-}$, where S+ is a Seebeck coefficient of a positive conductor of a material pair, and S- is a Seebeck coefficient of a negative conductor of a material pair;

- transform the weighted average of the temperature of the cold end ($T_{w,ave}$) to a voltage either using a conversion data table of the used thermocouple type or using a calculation formula involving correction coefficients of the applied thermocouple type;
- add the measured thermal voltage to the calculated voltage value, thus obtaining a correct thermal voltage value for the hot end temperature calculation; and
- convert the correct thermal voltage value to a temperature value using the conversion data table of the used thermocouple type or the calculation formula supplied with the correction coefficients, thus obtaining an accurate hot end temperature value (t).

2. The arrangement according to claim 1, **characterized in that** the arrangement is further configured to:

- perform temperature measurements of the first ($t_1$) and second ($t_2$) temperatures separately, at mutually different times.

3. The arrangement according to claim 1, **characterized in that**:

- obtaining the temperature of the hot end of the thermocouple (30) either from a data table or via a calculation formula, which comprises polynomial correction coefficients of the thermocouple (30), or by another means for transforming the thermal voltage into temperature.

4. The arrangement according to claim 1, **characterized in that** the ratio (N) of generated thermal voltages is configured to be applied as a temperature-dependent parameter either via data table -based information or via polynomial equations.

5. A method for measuring temperature (t) using a thermocouple (30) in an arrangement, where the thermocouple (30) comprises a cold end and a hot end, the arrangement further comprising a processor, and

- a positive conductor (31) of the thermocouple (30) and a negative conductor (32) of the thermocouple (30), where the positive (31) and negative (32) conductors are attached together in the hot end of the thermocouple (30), and where materials of the positive (31) and negative (32) conductors form a material pair; and
- a first measurement point (33) along the positive conductor (31), and a second measurement point (34) along the negative conductor (32);

wherein the method comprises the steps of:

- obtaining a Seebeck coefficient (S) for the material pair, either from previously obtained results in an external data source or by measuring temperature-voltage characteristics of the thermocouple (30);
- measuring a thermal voltage ($U_3$) in the cold end of the thermocouple (30) where $U_3 = U_1 - U_2$, where $U_1$ is the generated thermal voltage in the positive (31) conductor of the thermocouple (30) and $U_2$ is the generated thermal voltage in the negative (31) conductor of the thermocouple (30);
- measuring a first temperature ($t_1$) in the cold end of the thermocouple (30), using a first temperature sensor connected to the first measurement point (33);
- measuring a second temperature ($t_2$) in the cold end of the thermocouple (30), using the first temperature sensor or a second temperature sensor connected to the second measurement point (34);

**characterized in that** the method further comprises the steps of:

- calculating a weighted average of the temperature of the cold end ($T_{w,ave}$) by $T_{w,ave} = t_1 - \dfrac{t_1 - t_2}{N}$

where $N = \dfrac{U_1}{U_2}$ here N is obtained from the respective Seebeck coefficient data table for the respective material pair of the used thermocouple, according to $N = \dfrac{S_+}{S_-}$, where S+ is a Seebeck coefficient of a positive conductor of a material pair, and S- is a Seebeck coefficient of a negative conductor of a material pair;

- transforming the weighted average of the temperature of the cold end ($T_{w,ave}$) to a voltage either using a conversion data table of the used thermocouple type or using a calculation formula involving correction coefficients of the applied thermocouple type;

- adding the measured thermal voltage to the calculated voltage value, thus obtaining a correct thermal voltage value for the hot end temperature calculation; and
- converting the correct thermal voltage value to a temperature value using the conversion data table of the used thermocouple type or the calculation formula supplied with the correction coefficients, thus obtaining an accurate hot end temperature value (t).

6. The method according to claim 5, **characterized in that**:

- obtaining the temperature of the hot end of the thermocouple (30) either from a data table or via a calculation formula, which comprises polynomial correction coefficients of the thermocouple (30), or by another means for transforming the thermal voltage into temperature.

7. The method according to claim 5, **characterized in that** the method further comprises the step of:

- applying the ratio (N) of generated thermal voltages as a temperature-dependent parameter either via data table -based information or via polynomial equations.

**Patentansprüche**

1. Anordnung zum Messen der Temperatur (t) unter Verwendung eines Thermoelements (30), wobei das Thermoelement (30) ein kaltes Ende und ein heißes Ende umfasst, wobei die Anordnung einen Prozessor umfasst; und

- einen positiven Leiter (31) des Thermoelements (30) und einen negativen Leiter (32) des Thermoelements (30), wobei der positive (31) und der negative (32) Leiter im heißen Ende des Thermoelements (30) miteinander verbunden sind, und wobei die Materialien des positiven (31) und des negativen (32) Leiters ein Materialpaar bilden; und
- einen ersten Messpunkt (33) entlang des positiven Leiters (31), und einen zweiten Messpunkt (34) entlang des negativen Leiters (32);
wobei die Anordnung konfiguriert ist zum:

- Erhalten eines Seebeck-Koeffizienten (S) für das Materialpaar, entweder aus zuvor erhaltenen Ergebnissen in einer externen Datenquelle oder durch Messen der Temperaturspannungseigenschaften des Thermoelementes (30);
- Messen einer Thermospannung ($U_3$) im kalten Ende des Thermoelements (30), wobei $U_3 = U_1 - U_2$ ist, wobei $U_1$ die erzeugte Thermospannung im positiven (31) Leiter des Thermoelements (30) und $U_2$ die erzeugte Thermospannung im negativen (31) Leiter des Thermoelements (30) ist;
- Messen einer ersten Temperatur ($t_1$) im kalten Ende des Thermoelements (30) unter Verwendung eines ersten Temperatursensors, der mit dem ersten Messpunkt (33) verbunden ist;
- Messen einer zweiten Temperatur ($t_2$) im kalten Ende des Thermoelements (30) unter Verwendung des ersten Temperatursensors oder eines zweiten Temperatursensors, der mit dem zweiten Messpunkt (34) verbunden ist;

**dadurch gekennzeichnet, dass** der Prozessor der Anordnung ferner konfiguriert ist zum:

- Berechnen eines gewichteten Durchschnitts der Temperatur des kalten Endes ($T_{w,ave}$) durch
$$T_{w,ave} = t_1 - \frac{t_1 - t_2}{N}$$ wobei $N = \frac{U_1}{U_2}$ wobei N aus der jeweiligen Seebeck-Koeffizienten-Datentabelle für das jeweilige Materialpaar des verwendeten Thermoelements erhalten wird, nach $N = \frac{S_+}{S_-}$ , wobei $S_+$ ein Seebeck-Koeffizient eines positiven Leiters eines Materialpaares ist und S- ein Seebeck-Koeffizient eines negativen Leiters eines Materialpaares ist;
- Transformieren des gewichteten Durchschnitts der Temperatur des kalten Endes ($T_{w,ave}$) in eine Spannung, entweder unter Verwendung einer Konvertierungstabelle des verwendeten Thermoelementtyps oder unter Verwendung einer Berechnungsformel mit Korrekturkoeffizienten des verwendeten Thermoelementtyps;
- Hinzufügen der gemessenen Thermospannung zu dem berechneten Spannungswert, wodurch ein korrekter thermischer Spannungswert für die Berechnung der Temperatur am heißen Ende erhalten wird; und
- Konvertieren des korrekten Thermospannungswerts in einen Temperaturwert unter Verwendung der Konvertierungsdatentabelle des verwendeten Thermoelementtyps oder der mit den Korrekturkoeffizienten gelieferten Berechnungsformel, wodurch ein genauer Temperaturwert des heißen Endes (t) erhalten wird.

2.  Anordnung nach Anspruch 1, **dadurch gekennzeichnet, dass** die Anordnung ferner konfiguriert ist zum:

- Durchführen von Temperaturmessungen der ersten ($t_1$) und der zweiten ($t_2$) Temperatur getrennt voneinander, zu unterschiedlichen Zeitpunkten.

3.  Anordnung nach Anspruch 1, **dadurch gekennzeichnet, dass:**

- Erhalten der Temperatur des heißen Endes des Thermoelements (30) entweder aus einer Datentabelle oder über eine Berechnungsformel, die polynomische Korrekturkoeffizienten des Thermoelements (30) umfasst, oder durch ein anderes Mittel zur Umwandlung der Thermospannung in Temperatur.

4.  Anordnung nach Anspruch 1, **dadurch gekennzeichnet, dass** das Verhältnis (N) der erzeugten Thermospannungen als temperaturabhängiger Parameter entweder über eine auf Datentabellen basierende Information oder über Polynomgleichungen anwendbar ist.

5.  Verfahren zum Messen der Temperatur (t) unter Verwendung eines Thermoelementes (30) in einer Anordnung, wobei das Thermoelement (30) ein kaltes Ende und ein heißes Ende umfasst, wobei die Anordnung ferner einen Prozessor umfasst, und

- einen positiven Leiter (31) des Thermoelements (30) und einen negativen Leiter (32) des Thermoelements (30), wobei der positive (31) und der negative (32) Leiter im heißen Ende des Thermoelements (30) miteinander verbunden sind, und wobei die Materialien des positiven (31) und des negativen (32) Leiters ein Materialpaar bilden; und
- einen ersten Messpunkt (33) entlang des positiven Leiters (31), und einen zweiten Messpunkt (34) entlang des negativen Leiters (32);
wobei das Verfahren die folgenden Schritte umfasst:

- Erhalten eines Seebeck-Koeffizienten (S) für das Materialpaar, entweder aus zuvor erhaltenen Ergebnissen in einer externen Datenquelle oder durch Messen der Temperaturspannungseigenschaften des Thermoelementes (30);
- Messen einer Thermospannung ($U_3$) im kalten Ende des Thermoelements (30), wobei $U_3 = U_1 - U_2$ ist, wobei $U_1$ die erzeugte Thermospannung im positiven (31) Leiter des Thermoelements (30) und $U_2$ die erzeugte Thermospannung im negativen (31) Leiter des Thermoelements (30) ist;
- Messen einer ersten Temperatur ($t_1$) im kalten Ende des Thermoelements (30) unter Verwendung eines ersten Temperatursensors, der mit dem ersten Messpunkt (33) verbunden ist;
- Messen einer zweiten Temperatur ($t_2$) im kalten Ende des Thermoelements (30) unter Verwendung des ersten Temperatursensors oder eines zweiten Temperatursensors, der mit dem zweiten Messpunkt (34) verbunden ist;

**dadurch gekennzeichnet, dass** das Verfahren ferner die folgenden Schritte umfasst:

- Berechnen eines gewichteten Durchschnitts der Temperatur des kalten Endes ($T_{w,ave}$) durch

$$T_{w,ave} = t_1 - \frac{t_1 - t_2}{N}$$ wobei $N = \frac{U_1}{U_2}$ wobei N aus der jeweiligen Seebeck-Koeffizienten-Datentabelle für das jeweilige Materialpaar des verwendeten Thermoelements erhalten wird, nach

$$N = \frac{S_+}{S_-}$$ wobei $S_+$ ein Seebeck-Koeffizient eines positiven Leiters eines Materialpaares ist und S- ein Seebeck-Koeffizient eines negativen Leiters eines Materialpaares ist;
- Transformieren des gewichteten Durchschnitts der Temperatur des kalten Endes ($T_{w,ave}$) in eine Spannung, entweder unter Verwendung einer Konvertierungstabelle des verwendeten Thermoelementtyps oder unter Verwendung einer Berechnungsformel mit Korrekturkoeffizienten des verwendeten Thermoelementtyps;

- Hinzufügen der gemessenen Thermospannung zu dem berechneten Spannungswert, wodurch ein korrekter thermischer Spannungswert für die Berechnung der Temperatur am heißen Ende erhalten wird; und
- Konvertieren des korrekten Thermospannungswerts in einen Temperaturwert unter Verwendung der Konvertierungsdatentabelle des verwendeten Thermoelementtyps oder der mit den Korrekturkoeffizienten gelieferten Berechnungsformel, wodurch ein genauer Temperaturwert des heißen Endes (t) erhalten wird.

6. Verfahren nach Anspruch 5, **dadurch gekennzeichnet, dass:**

- Erhalten der Temperatur des heißen Endes des Thermoelements (30) entweder aus einer Datentabelle oder über eine Berechnungsformel, die polynomische Korrekturkoeffizienten des Thermoelements (30) umfasst, oder durch ein anderes Mittel zur Umwandlung der Thermospannung in Temperatur.

7. Verfahren nach Anspruch 5, **dadurch gekennzeichnet, dass** das Verfahren ferner den folgenden Schritt umfasst:

- Anwenden des Verhältnisses (N) der erzeugten Thermospannungen als temperaturabhängiger Parameter entweder über auf Datentabellen basierende Informationen oder über Polynomgleichungen.

## Revendications

1. Agencement de mesure de température (t) à l'aide d'un thermocouple (30), où le thermocouple (30) comprend une extrémité froide et une extrémité chaude, dans lequel l'agencement comprend un processeur ; et

- un conducteur positif (31) du thermocouple (30) et un conducteur négatif (32) du thermocouple (30), où les conducteurs positif (31) et négatif (32) sont reliés ensemble à l'extrémité chaude du thermocouple (30), et où les matériaux des conducteurs positif (31) et négatif (32) forment une paire de matériaux ; et
- un premier point de mesure (33) le long du conducteur positif (31), et un second point de mesure (34) le long du conducteur négatif (32) ;
dans lequel l'agencement est configuré pour :

- obtenir un coefficient Seebeck (S) pour la paire de matériaux, soit à partir de résultats précédemment obtenus dans une source de données externe, soit en mesurant les caractéristiques température-tension du thermocouple (30) ;
- mesurer une tension thermique ($U_3$) dans l'extrémité froide du thermocouple (30) où $U_3 = U_1 - U_2$, où $U_1$ est la tension thermique générée dans le conducteur positif (31) du thermocouple (30) et $U_2$ est la tension thermique générée dans le conducteur négatif (31) du thermocouple (30);
- mesurer une première température ($t_1$) dans l'extrémité froide du thermocouple (30), à l'aide d'un premier capteur de température connecté au premier point de mesure (33) ;
- mesurer une seconde température ($t_2$) dans l'extrémité froide du thermocouple (30), à l'aide du premier capteur de température ou un second capteur de température connecté au second point de mesure (34) ;

**caractérisé en ce que** le processeur de l'agencement est également configuré pour :

- calculer une moyenne pondérée de la température de l'extrémité froide ($T_{w.ave}$) par $$T_{w,ave} = t_1 - \frac{t_1 - t_2}{N}$$ où $$N = \frac{U_1}{U_2}$$ où N est obtenu à partir du tableau de données du coefficient Seebeck respectif pour la paire de matériaux respective du thermocouple utilisé, selon $$N = \frac{S_+}{S_-},$$ où

$S_+$ est un coefficient Seebeck d'un conducteur positif d'une paire de matériaux, et S- est un coefficient Seebeck d'un conducteur négatif d'une paire de matériaux ;
- transformer la moyenne pondérée de la température de l'extrémité froide ($T_{w,ave}$) en une tension soit à l'aide d'un tableau de données de conversion du type de thermocouple utilisé, soit à l'aide d'une formule de calcul impliquant des coefficients de correction du type de thermocouple appliqué ;
- ajouter la tension thermique mesurée à la valeur de tension calculée, obtenant ainsi une valeur de tension thermique correcte pour le calcul de la température de l'extrémité chaude ; et
- convertir la valeur de tension thermique correcte en une valeur de température à l'aide du tableau de données de conversion du type de thermocouple utilisé ou de la formule de calcul fournie avec les coefficients de correction, obtenant ainsi une valeur de température précise de l'extrémité chaude (t).

2. Agencement selon la revendication 1, **caractérisé en ce qu'**il est également configuré pour :

- réaliser des mesures de température des première ($t_1$) et seconde ($t_2$) températures séparément, à des moments différents.

3. Agencement selon la revendication 1, **caractérisé en ce que** :

- l'obtention de la température de l'extrémité chaude du thermocouple (30) soit à partir d'un tableau de données, soit par le biais d'une formule de calcul, qui comprend des coefficients de correction polynomiaux du thermocouple (30), soit par un autre moyen de transformation de la tension thermique en température.

4. Agencement selon la revendication 1, **caractérisé en ce que** le rapport (N) des tensions thermiques générées est configuré pour être appliqué comme un paramètre dépendant de la température soit par le biais des informations basées sur un tableau de données, soit par le biais des équations polynomiales.

5. Procédé de mesure de température (t) à l'aide d'un thermocouple (30) dans un agencement, où le thermocouple (30) comprend une extrémité froide et une extrémité chaude, l'agencement comprenant également un processeur, et

- un conducteur positif (31) du thermocouple (30) et un conducteur négatif (32) du thermocouple (30), où les conducteurs positif (31) et négatif (32) sont reliés ensemble à l'extrémité chaude du thermocouple (30), et où les matériaux des conducteurs positif (31) et négatif (32) forment une paire de matériaux ; et
- un premier point de mesure (33) le long du conducteur positif (31), et un second point de mesure (34) le long du conducteur négatif (32) ;
dans lequel le procédé comprend les étapes :

- d'obtention d'un coefficient Seebeck (S) pour la paire de matériaux, soit à partir de résultats précédemment obtenus dans une source de données externe, soit en mesurant les caractéristiques température-tension du thermocouple (30) ;
- de mesure d'une tension thermique ($U_3$) dans l'extrémité froide du thermocouple (30) où $U_3 = U_1 - U_2$, où $U_1$ est la tension thermique générée dans le conducteur positif (31) du thermocouple (30) et $U_2$ est la tension thermique générée dans le conducteur négatif (31) du thermocouple (30) ;
- de mesure d'une première température ($t_1$) dans l'extrémité froide du thermocouple (30), à l'aide d'un premier capteur de température connecté au premier point de mesure (33) ;
- de mesure d'une seconde température ($t_2$) dans l'extrémité froide du thermocouple (30), à l'aide du premier capteur de température ou d'un second capteur de température connecté au second point de mesure (34) ;

**caractérisé en ce que** le procédé comprend également les étapes :

- de calcul d'une moyenne pondérée de la température de l'extrémité froide ($T_{w,ave}$) par

$$T_{w,ave} = t_1 - \frac{t_1 - t_2}{N} \quad \text{où} \quad N = \frac{U_1}{U_2}$$

où N est obtenu à partir du tableau de données du coefficient Seebeck respectif pour la paire de matériaux respective du thermocouple utilisé, selon $N = \frac{S_+}{S_-}$ où $S_+$ est un coefficient Seebeck d'un conducteur positif d'une paire de matériaux, et S- est un coefficient Seebeck d'un conducteur négatif d'une paire de matériaux ;
- de transformation de la moyenne pondérée de la température de l'extrémité froide ($T_{w,ave}$) en une tension soit à l'aide d'un tableau de données de conversion du type de thermocouple utilisé, soit à l'aide d'une formule de calcul impliquant des coefficients de correction du type de thermocouple appliqué ;
- d'ajout de la tension thermique mesurée à la valeur de tension calculée, obtenant ainsi une valeur de tension thermique correcte pour le calcul de la température de l'extrémité chaude ; et
- de conversion de la valeur de tension thermique correcte en une valeur de température à l'aide du tableau de données de conversion du type de thermocouple utilisé ou de la formule de calcul fournie avec les coefficients de correction, obtenant ainsi une valeur de température d'extrémité chaude précise (t).

6. Procédé selon la revendication 5, **caractérisé en ce que** :

- l'obtention de la température de l'extrémité chaude du thermocouple (30) soit à partir d'un tableau de données, soit par le biais d'une formule de calcul, qui comprend des coefficients de correction polynomiaux du thermocouple (30), soit par un autre moyen de transformation de la tension thermique en température.

7. Procédé selon la revendication 5, **caractérisé en ce qu'**il comprend également l'étape :

- d'application du rapport (N) des tensions thermiques générées comme paramètre dépendant de la température, soit par le biais des informations basées sur un tableau de données, soit par le biais des équations polynomiales.

Figure 1

prior art

Figure 2

prior art

EP 4 553 466 B1

$U_1$

30

31

35

− $t_1$

Cu

+

33

t

$U_3$

34

−

Cu

32

− $t_2$

36

$U_2$

Figure 3

EP 4 553 466 B1

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102013109809
- CN 101603863
- CN 215865540 U
- EP 1510801 A
- EP 2508857 B1
- US 20060067377 A1